# EUROPEAN PATENT SPECIFICATION

(11) **EP 3 298 083 B1**
(45) Date of publication and mention of the grant of the patent: **13.01.2021**
(21) Application number: 16729111.1
(22) Date of filing: 23.05.2016
(51) Int. Cl.: C09D 5/00

(54) **ANTIMICROBIAL AGENT FOR COATING COMPOSITION**
ANTIMIKROBIELLES MITTEL FÜR BESCHICHTUNGSZUSAMMENSETZUNG
AGENT ANTIMICROBIEN POUR COMPOSITION DE REVÊTEMENT

(30) Priority: 21.05.2015 US 201562164870 P
(43) Date of publication of application: 28.03.2018
(73) Proprietor: SWIMC LLC, Cleveland, Ohio 44115 (US)
(72) Inventor: GELLING, Victoria, J., Minneapolis, MN 55440-1461 (US); DEBROY, Tapan, Minneapolis, MN 55440-1461 (US); REN, Chun, Wilmington, DE 19805 (US); MESSIN, Mallory, Minneapolis, MN 55440-1461 (US)
(74) Representative: Vossius & Partner Patentanwälte Rechtsanwälte mbB
(86) International application number: PCT/US2016/033796
(87) International publication number: WO 2016/187617

(56) References cited:
- WO-A1-02/087339
- WO-A1-02/087340
- US-A1- 2003 203 991

## Description

The present invention provides a method of maintaining an electrodeposition system free of microbial contamination, comprising adding an antimicrobial agent comprising at least an inorganic bismuth-containing compound to at least a part of the electrodeposition system.

### BACKGROUND OF THE INVENTION

Coatings (e.g., paints) are typically applied to substrates to provide protective or decorative qualities, and can be applied to a wide variety of substrates, including metal, wood, composite materials, glass, plastic, cardboard, cementitious substrates, fiberglass, fiber board, corrugated board, paper, textiles, non-woven materials, foam, and the like. Coatings and paints have a broad range of residential and commercial uses.

There is a longstanding need in the industry for a coating composition or paint that can resist or even prevent microbial growth, including bacterial and fungal growth. Microbial contamination constitutes a health problem, especially indoors, and can also have significant impact on the aesthetic appearance of a coating.

Antimicrobial and/or antifungal paints are known in the industry. However, many such paints include antimicrobial additives that are potentially toxic and create significant health hazards. Moreover, some antimicrobial additives are difficult to combine with standard coating or paint formulations, and consequently, these formulations may exhibit poor aesthetic appeal or poor performance in a particular end use.

For example, electrocoat systems are used to apply coating compositions or paint to a variety of substrates. Typically, electrocoat systems are warm and damp, providing ideal conditions of undesirable microorganism growth. Once microorganisms colonize on an electrocoat system, removing the contamination is time-consuming and prohibitively costly. High levels of contamination in an electrocoat system lead to significant operational issues during manufacture. Existing methods to clean electrocoat systems have significant disadvantages. Many of the chemicals used to decontaminate baths are toxic and/or costly, and treatment of the electrocoat system is time-consuming, as many contaminated areas cannot be easily accessed and the effectiveness of the decontamination cannot be assessed until days after the treatment is applied.

From the foregoing, it will be appreciated that what is needed in the art is an effective antimicrobial agent for paints and other coatings that can be readily included in a coating formulation or paint, is environmentally friendly and has low toxicity. Such an antimicrobial agent and methods for using the same in paints and coatings are disclosed herein.

US-A-2003/0203991 describes aqueous coating compositions for providing the surface of an object with a durable hydrophilic coating, comprising a) a multifunctional polymeric carrier dispersed or emulsified in water and capable of forming a polymeric matrix; b) a hydrophilic water-soluble organic monomer, polymer or copolymer; c) a multifunctional aqueous colloidal metal oxide; d) a multifunctional crosslinker; and optionally an auxiliary agent which can be selected from a voluminous list which mentions an antimicrobial agent.

WO-A-02/087339 and WO-A-02/087340 describe a process of manufacturing a metal sheet precoated with an antimicrobial polymer coating, said process comprising applying a polymer coating onto at least one planar surface of the substrate by powder coating or by roll coating the substrate with a polymer containing an antimicrobial powder comprising core particles associated with an antimicrobial metal component selected from the group consisting of silver, copper, zinc, mercury, tin, lead, bismuth, cadmium, chromium, cobalt, nickel, and thallium ions and mixtures thereof.

### SUMMARY

The present description provides a microbe-resistant coating composition that includes at least a binder resin, pigment and vehicle along with an antimicrobial agent. The present description includes a treating composition for an electrodeposition system, a method for reducing microbial contamination in an electrodeposition bath and a method for maintaining an electrodeposition bath free of microbial contamination.

Herein also described is a method of treating an electrodeposition system.

The method includes steps of providing an effective amount of at least one antimicrobial agent including at least an inorganic bismuth-containing compound, and adding the antimicrobial agent to at least a part of the electrodeposition system.

The claimed invention provides a method of maintaining an electrodeposition system free of microbial contamination, as defined in the claims. The method includes steps of providing an effective amount of at least one antimicrobial agent including at least an inorganic bismuth-containing compound, and adding the antimicrobial agent to at least a part of the electrodeposition system. The inorganic bismuth-containing compound is a bismuth salt of a metal oxyanion or a hydrate thereof.

Herein also described is a treating composition for electrodeposition systems.

The treating composition has an effective amount of at least one antimicrobial agent including at least an inorganic bismuth-containing compound to eliminate microbial contamination in the electrodeposition system.

The above summary of the present invention is not intended to describe each disclosed embodiment or every implementation of the present invention. The description that follows more particularly exemplifies illustrative embodiments. In several places throughout the application, guidance is provided through lists of examples, which can be used in various combinations. In each instance, the recited list serves only as a representative group and should not be interpreted as an exclusive list.

The details of one or more embodiments of the invention are set forth in the description below. Other features, objects, and advantages of the invention will be apparent from the description, and from the claims.

### SELECTED DEFINITIONS

Unless otherwise specified, the following terms as used herein have the meanings provided below.

The term "component" refers to any compound that includes a particular feature or structure. Examples of components include compounds, monomers, oligomers, polymers, and organic groups contained therein.

The term "antimicrobial agent" refers to a compound or component that kills microorganisms or inhibits their growth. A microorganism in this context can be any microbe or microscopic organism, including for example, a bacterium, a fungus, or a virus. As used herein, the term "antimicrobial" includes compounds or components regarded as being "antibacterial" or "antifungal."

As used herein, the term "microbe-resistant," when applied to a coating composition or paint, means a coating composition or paint that includes an effective amount of an antimicrobial agent to produce a biostatic effect (e.g. significantly reduce microbial contamination) or even a biocidal effect (e.g. eliminate microbial contamination). Reduction or elimination of microbial contamination can occur on (i) a surface already exhibiting microbial growth or contamination, or (ii) on a surface with high potential for supporting microbial growth or contamination.

The term "on", when used in the context of a coating applied on a surface or substrate, includes coatings applied directly or indirectly to the surface or substrate. Thus, for example, a coating applied to a primer layer overlying a substrate constitutes a coating applied on the substrate.

The term "electrodeposition," as used herein, refers to a process that uses electric current to reduce dissolved metal cations to form a metal coating on a substrate that acts as an electrode. Where the substrate forms the cathode, the process is known as cathodic or cationic electrodeposition. Where the substrate forms the anode, the process is known as anodic or anionic electrodeposition. The terms "electrocoating" and "electrocoat" are used interchangeably with electrodeposition.

As used herein, the term "electrodeposition system" refers to the electrodeposition composition, the substrate to be coated, the electrodeposition bath, and any and all associated equipment required to carry out an electrodeposition operation.

The term "effective amount" when used in connection with an antimicrobial agent refers to an amount sufficient to at least prevent microbes from colonizing, or if microbial colonies are present upon the introduction or use of the antimicrobial agent, to reduce the amount of microbial colonies by at least 5%.

Unless otherwise indicated, the term "polymer" includes both homopolymers and copolymers (i.e., polymers of two or more different monomers).

The term "comprises" and variations thereof do not have a limiting meaning where these terms appear in the description and claims.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably. Thus, for example, a coating composition that comprises "an" additive can be interpreted to mean that the coating composition includes "one or more" additives.

Also herein, the recitations of numerical ranges by endpoints include all numbers subsumed within that range (e.g., 1 to 5 includes 1, 1.5, 2, 2.75, 3, 3.80, 4, 5, etc.). Furthermore, disclosure of a range includes disclosure of all subranges included within the broader range (e.g., 1 to 5 discloses 1 to 4, 1.5 to 4.5, 1 to 2, etc.).

### DETAILED DESCRIPTION

The claimed invention relates to the subject-matter as defined in the claims.

The present description provides a microbe-resistant coating composition or paint that includes an antimicrobial agent. Certain embodiments of coating compositions or paints may include, for example, at least a binder resin, an inorganic bismuth-containing compound and optionally a pigment, a film forming resin, and a dispersion or wetting agent. In an aspect, the coating composition or paint resists microbial growth. In another aspect, the coating composition or paint provides at least a 5% reduction, preferably at least 10%, more preferably by at least a 1 log reduction and most preferably at least a 2 log reduction, of existing microbial growth when applied to a contaminated system or surface.

The coating composition or paint may be any type of organic, inorganic, or hybrid coating, and any type of liquid coating composition, powder coating composition, or combinations thereof. The coating composition generally includes a film forming resin or binder, optionally, a curing or crosslinking agent for the resin, and one or more pigments. In an aspect, the coating composition or paint may be suitable for use in a low-VOC or zero-VOC composition or paint.

In certain embodiments, the binder resin and a film forming resin, optionally, a curing or crosslinking agent for the resin, and one or more pigments may be initially provided in a two part system and combined to form an electrodeposition bath. For example, the film forming resin and optionally a crosslinking agent may be prepared as an emulsion to be subsequently combined with a pigment paste to form an electrodeposition bath for coating articles. The pigment paste may contain a dispersing polymer, often referred to by those of ordinary skill in the art as a pigment grind resin, and one or more pigments. An effective amount of at least one of the disclosed antimicrobial agents may be included or added to either the emulsion, the pigment paste, or both and utilized in an electrodeposition bath.

The binder resin may be selected from any resin component or combination of resin components that provide the desired film properties. Non-limiting examples of polymeric binders include thermoset and/or thermoplastic materials, and can be made from epoxy, polyester, polyurethane, polyamide, acrylic, polyvinylchloride, nylon, fluoropolymer, silicone, and other resins, or combinations thereof. Acrylics, epoxies, polyurethanes and polyesters are particularly preferred.

In an aspect, the coating composition or paint may include one or more pigment components, including pigments or fillers used to tone or opacify the coating composition or paint. Suitable examples of pigments include, without limitation, titanium dioxide white, carbon black, lamp black, black iron oxide, red iron oxide, yellow iron oxide, brown iron oxide (a blend of yellow and red oxide with black oxide), phthalocyanine green, phthalocyanine blue, organic reds (such as naphthol red, quinacridone red and toluidine red), quinacridone magenta, quinacridone violent, DNA orange, and/or organic yellows (such as Hansa yellow), for example.

In addition to at least one binder resin, and at least one pigment, the coating composition or paint may include one or more additives. Suitable additives include, without limitation, fillers, thixotropes, rheological modifiers, matting agents, and the like. The additives may include one or more ingredients added to a paint to modify the properties or enhance paint performance during storage, handling, application and other or subsequent stages. Desirable performance characteristics of a coating composition or paint include, for example, chemical resistance, corrosion resistance, microbe resistance, abrasion resistance, tack resistance, hardness, gloss, reflectivity, extended shelf life, appearance and/or a combination of such properties and similar other properties. Preferred performance enhancing additives include lacquers, waxes, flatting agents, antimicrobial agents, additives to prevent mar, abrasion, and the like.

Accordingly, in one embodiment, the present description provides an inorganic bismuth-containing antimicrobial agent, for preventing, reducing or eliminating microbial contamination or growth in a coating composition or paint. The antimicrobial agent is preferably present in an amount sufficient to at least prevent microbes from colonizing, or if microbial colonies are present upon the introduction or use of the antimicrobial agent, to reduce the amount of microbial colonies by at least 5%, preferably at least 10%, more preferably by at least a 1 log reduction and most preferably at least a 2 log reduction. A variety of such antimicrobial agents may be employed. Specific inorganic bismuth-containing antimicrobial agents may be selected based upon, for example, the microorganism(s) to be treated; the physical and chemical compatibility of the antimicrobial agent with the system to be treated; the stability of the antimicrobial agent under storage conditions; toxicity; other environmental factors, or economic factors. The antimicrobial agent described desirably is a non-allergenic material with low human toxicity. The water-solubility of the antimicrobial agent is a desirable factor, but is not necessary in all embodiment, for example when solvents other than water or suspensions of antimicrobial agents are employed. Mixtures of antimicrobial agents, including mixtures having synergistic activity, may also be used.

Accordingly, in an aspect, the antimicrobial agent includes at least a bismuth-containing compound, preferably an inorganic bismuth compound, more preferably multivalent bismuth salts of various anions, and most preferably an inorganic bismuth salt of a metal oxyanion. These compounds include their anhydrous forms as well as various hydrates, including hemihydrate, pentahydrate, and other hydrated forms, along with mixtures and combinations thereof, and the like. In the method of the claimed invention, the at least one antimicrobial agent comprises at least an inorganic bismuth-containing compound which is a bismuth salt of a metal oxyanion or a hydrate thereof.

Suitable examples of such bismuth salts of various anions include, without limitation, bismuth silicate, bismuth magnesium aluminosilicate, bismuth aluminate, bismuth borate, bismuth manganate, bismuth phosphate, and the like. In a preferred aspect, the inorganic bismuth-containing compound is a bismuth salt of a metal oxyanion, such as, for example, bismuth aluminate, bismuth manganate, and mixtures or combinations thereof, and the like.

In some embodiments, the inorganic bismuth-containing compound may be used with one or more organic bismuth-containing compounds, including, for example, bismuth subcarbonate, bismuth subcitrate, bismuth citrate, bismuth titrate, bismuth gallate, bismuth subgallate, bismuth salicylate, bismuth subsalicylate, and the like, for example. The inorganic bismuth-containing compound may be used with one or more other inorganic bismuth-containing compounds, e.g. bismuth compounds that are not metal oxyanions of bismuth. Suitable examples of such compounds include, without limitation, bismuth hydroxide, bismuth trioxide, bismuth nitrate, bismuth subnitrate, and the like, and mixtures or combinations thereof..

Many inorganic compounds are considered difficult to use as antibacterial agents and many have serious drawbacks including environmental toxicity and cost. Surprisingly, an inorganic bismuth compound, such as bismuth aluminate, demonstrates effective antimicrobial activity when used in a coating composition or paint, is relatively inexpensive, and is not toxic to the environment.

Moreover, many conventional biocide or biosurfactant systems currently used with coating compositions or paints are used primarily to reduce or inhibit biofilm formation, e.g. sessile microorganism contamination where the microorganisms become attached to parts or substrates to which the coating composition or paint is applied. In contrast, the disclosed antimicrobial agent may be used to treat both sessile microorganism contamination as well as contamination caused by freely moving microorganisms, i.e. motile microorganism contamination.

A popular and effective technique for applying coatings compositions or paints includes the electrocoating process, which typically involves depositing a composition onto an electrically conductive substrate with an applied electrical potential. Early attempts at commercial electrocoating processes used anionic electrocoating processes, where the substrate being coated served as the anode. However, cathodic or cationic electrocoating processes have become increasingly popular, and today, are the most prevalent methods of electrocoating. The disclosed bismuth-containing antimicrobial agent may be utilized in either anodic or cathodic electrodeposition processes.

Microbial contamination is a significant problem in electrocoating. The electrocoating process is conducted in a wet environment at high temperatures, conditions ideal for the growth of microorganisms that can colonize the electrocoating system and reduce the quality and performance of the coatings produced by the process. Removing such microbial contamination is typically time-consuming and expensive.

Various techniques have been used in the industry to prevent or reduce microbial growth in electrocoat tanks and on other electrocoating equipment. Physical removal methods such as powerwashing, for example, have been used. Chemical methods such as the use of biocides, halogenated compounds, and metal-containing compounds are also known. However, these methods suffer from several disadvantages. They are often expensive and labor-intensive, and some chemicals used to reduce or prevent microbial contamination may be toxic. Environmental concerns over releasing toxic chemicals into the air or waste water streams also militate against use of such chemicals.

In one embodiment, the present description provides a method for maintaining an electrodeposition system substantially free of microbial contamination. The method may prevent, reduce or eliminate microbial contamination in an electrodeposition bath without releasing toxic chemicals into the air or waste water streams and without using expensive and labor-intensive techniques or materials. In certain embodiments, the method provides an electrodeposition bath and adds to the bath an effective amount of an inorganic bismuth-containing antimicrobial agent. In an aspect, the antimicrobial agent may be added to the electrodeposition bath after the bath is first prepared and before electrodeposition. In another aspect, the antimicrobial agent may be added to the electrodeposition bath during operation if microbial contamination is observed. In yet another aspect, the antimicrobial agent may be added to the electrodeposition bath at regular intervals as part of a continuous process of electrodeposition.

In an embodiment, the inorganic bismuth-containing compound may be present in an electrodeposition system in an amount sufficient to provide a biostatic or biocidal effect, depending on the condition of the electrodeposition system, the extent of contamination, and the like. In an aspect, the inorganic bismuth-containing compound may be present in an amount of at least about 0.1 wt%, 0.2 wt% , 0.3 wt %, 0.5 wt% and up to 1 wt% to about 2 wt%, 5 wt%, 8 wt % or 10.0 wt% based on the total weight of resin solids in the electrodeposition composition. If the inorganic bismuth-containing compound is used in conjunction with an organic bismuth-containing compound or other catalyst, the inorganic bismuth-containing compound may be present in an amount of at least about 0.025 wt %, 0.05 wt%, or 0.075 wt % and up to about 0.5 wt %, 1 wt%, 2 wt % or about 5 wt%, based on the total weight of resin solids in the electrodeposition composition

In an embodiment, the antimicrobial agent may be added directly to any part of the electrodeposition system. This can for example encompass tanks, baths, pipes, conveyors, monorails, sprayers, walls, post-rinse systems, and the like. In a preferred aspect, the antimicrobial agent is added directly the electrodeposition bath. Depending on the type of surface or equipment of an electrodeposition system that needs to be treated, the delivery method for the antimicrobial agent can be adjusted accordingly. For example, a pigment paste containing the antimicrobial agent may be applied or added to the electrodeposition bath. In contrast to typical antimicrobial treatment systems, the disclosed inorganic bismuth-containing compound in some embodiments may be added directly to any part of the electrodeposition system and do not necessarily have to be put into solution or introduced into the system using expensive or complicated pumping or spraying mechanisms.

In an embodiment, the antimicrobial agent may be incorporated into a dispersion that can be added directly to, or is part of, an electrodeposition bath or tank. In another embodiment, the concentration of the antimicrobial agent in solution may be sufficient to reduce or eliminate microbial contamination in the electrodeposition bath or tank. In a preferred aspect, the dispersion includes one or more resin components, one or more pigment components, and one or more bismuth-containing compounds as described herein. In a further aspect, this dispersion may be mixed with an emulsion including an electrodeposition resin component. The mixture may then be diluted with sufficient deionized water to form an aqueous dispersion that functions as an electrodeposition bath.

Certain embodiments may optionally use a dispersion or wetting agent. The dispersion or wetting agent may enhance the stability of a dispersion and potentially offer improved viscosity and particle size stability. Those of ordinary skill in the art will recognize that the selection of a dispersant may depend upon the type of electrodeposition process employed. For example, with an anionic electrocoating process anionic or nonionic dispersants may be used such as DISPERBYK-190, or BYK 153 from Altana AG, Wesel, Germany. With cationic electrocoating systems, the dispersant is generally a nonionic or cationic dispersant such as or example Solsperse 33000 or 39000 from Lubrizol Advanced Materials, Inc., Wickliffe, OH.

The antimicrobial agent may also or instead be added to the electrodeposition system in a way that allows for effective circulation of the agent through the system. Without being bound by theory, circulation or movement of the antimicrobial agent may enhance antimicrobial activity, especially with respect to sessile microbial contamination or biofilm formation. In certain embodiments, such as during a routine cleaning procedure, sufficient microorganism control can be achieved by introducing the antimicrobial agent into the system and circulating for at fixed period of time, such as 2 to 4 hours, for example. In some embodiments of the method, circulation may be combined with the application of heat or by physical methods of removing contamination, such as washing or rinsing, for example.

The antimicrobial agent may be added directly into a liquid stream of an electrocoat process while the electrocoating process is in operation. This method can be used as an alternative to intermittent or scheduled treatments where equipment is exposed for a pre-determined period, as in a cleaning or maintenance procedure, or, the method can be practiced as an additional mode for treating an electrocoating operation. Thus, it is within the purview of the invention that an electrocoating operation can implement an ongoing treatment where, for example, one or more liquid streams within an electrocoating operation are pre-loaded with the antimicrobial agent described herein, where the agent is present throughout the process in an amount sufficient to reduce or inhibit microbial contamination. As an additive to a liquid stream, the antimicrobial agent described herein may prevent microorganisms from adhering and colonizing on electrocoating equipment, thereby preventing contamination within the process. In an aspect, liquid streams or liquid supplies of an electrocoat process may be pre-loaded with the antimicrobial agent to aid in minimizing microbial contamination from developing during electrodeposition. These liquid streams may include, for example, paint in supply drums, pipes and tanks, as well as post-rinse water and other liquids.

Accordingly, in an aspect, the antimicrobial agent described herein can be provided in concentrated form prior to addition to a liquid supply or stream. For example, the antimicrobial agent can be significantly more concentrated than the concentration level required for treatment during the electrodeposition process. In an aspect, the agent may be provided at about 3 to about 5 times greater concentration than the concentration required during a typical electrodeposition process.

In certain embodiments, the antimicrobial agent may be used in combination with conventional cleaning or preventative techniques, such as pressure washing, use of biocides, and manual scrubbing. Biocides can provide a synergistic effect when used in conjunction with the antimicrobial agent, as a biocide may destroy and possibly eliminate a targeted species of microorganism. The antimicrobial agent may be circulated through an electrocoat process before a biocide is added to the process, for example. In an exemplary method, the antimicrobial agent can be applied and used in the electrocoat process equipment about 15 to about 60 minutes before, during or after adding a biocide to the process.

To determine the effectiveness of the antimicrobial agent, it is useful to determine microorganism levels at least before the treatment and after implementing a treatment. A variety of methods and devices for monitoring and detecting levels and presence of microorganisms in a sample are known in the art, and any of these methods or devices may be used with the disclosed antimicrobial agent.

Preferably, significant decreases in contamination may be achieved in short time, e.g. less than about 24 hours to reduce or even eliminate microbial contamination. However, variations may exist in the effectiveness of the treatment or length of time required to achieve a desired reduction in contamination, depending on how severe the contamination was at the start of the cleaning process.

In a preferred embodiment, the agent or method may result in sustained elimination or decreased levels of microorganisms for at least one week or more of continuous electrocoat operating time. If relatively heavy contamination reappears and is detected within a short period, such as less than one week, one or more subsequent additions of the antimicrobial agent may reduce or eliminate the reappeared contamination.

The antimicrobial agent and/or method may be used as part of a preventive maintenance plan. Repeated, or intermittently scheduled treatments such as in a preventive maintenance schedule, can also be useful, particularly in heavily contaminated areas or areas that are prone to such contamination.

The disclosed method(s) may be integrated with an electrocoating operation. For example, the electrocoating process can include, among other things, a surface preparation system followed by an electrocoating application system, a post rinse system following the electrocoating application system, a curing system following the post rinse system; and a microbial contamination treatment system integrated with one or more of the process steps, such as, for example, surface preparation, electrocoat, post rinse, and curing systems. The microbial contamination treatment system can include a dispensing apparatus configured to add an effective amount of the antimicrobial agent to a desired portion of the electrodeposition system.

It is contemplated that various embodiments may include an electrocoating solution having the antimicrobial agent dispersed in the solution. For example, the antimicrobial agent may be included in the pigment paste component of an electrodeposition composition and provide antimicrobial activity during the electrodeposition process. The antimicrobial agent may be present in an amount sufficient to either kill motile microorganisms or break down the adherence between sessile microorganisms within the electrodeposition system. A solution of the antimicrobial agent may be added directly to any portion of the electrodeposition system, including directly to any liquid stream that passes through or is maintained in the process, or it may be used as a direct cleaning solution.

### EXAMPLES

The invention is illustrated by the following examples. It is to be understood that the particular examples, materials, amounts, and procedures are to be interpreted broadly in accordance with the inventions as set forth herein. Unless otherwise indicated, all parts and percentages are by weight and all molecular weights are weight average molecular weight. Unless otherwise specified, all chemicals used are commercially available from, for example, Sigma-Aldrich, St. Louis, Missouri.

### TEST METHODS

Unless indicated otherwise, the following test methods were utilized in the Examples that follow.

The Bacteria and Fungus Measurement Test: The bacteria measurement test is conducted on a Fisher #B21185X trypticase soy agar plate, from Fisher Scientific Inc. Waltham, MA. The fungus measurement test is conducted on a Fisher #B21180X sabourand dextrose agar, from Fisher Scientific Inc. The agar plates are stored at temperature of about 2 °C to about 8 °C until used. To test for bacterial and/or fungal contamination, samples are swabbed onto the sterile soy or dextrose agar plates on the day the samples are received. The plate covers are lifted a minimum distance from the bottom plates to swab a cross-hatch pattern. The plate is covered immediately and then inverted so that the agar media is on the upper plate. These plates are then incubated for up to seven days at 25 °C and bacterial or fungal growth on the plates is observed and reported according to a standard. The standard is as follows: A rating of "∼" indicates no growth, "+" indicates trace bacterial or fungal growth, "2+" indicates light bacterial or fungal growth, "3+" indicates moderate bacterial or fungal growth, and "4+" indicates heavy bacterial or fungal growth.

**Example 1. Preparation of Emulsion** (a) Preparation of Chain-extended Polyepoxide: The following ingredients were charged into a reaction vessel equipped with a heating source, stirrer, and a reflux: 1439.4 parts of EPON 828 (epoxy resin having an epoxy equivalent weight of 188; Hexion, Inc. Columbus, OH), 419.5 parts of SYNFAC 8009 (Bisphenol A polyol with hydroxy equivalent weight of 130; Dow Chemical Co., Midland, MI). The charge was heated to 165°C under a nitrogen blanket. 2.6 parts of dimethyl benzyl amine were added and the mixture was held at 165°C for one hour. An additional 5.2 parts dimethyl benzyl amine were added and the mixture was held at 165°C until an epoxy equivalent weight of 820 was obtained. 1333 parts of methyl isobutyl ketone (MIBK) solvent were added. The mixture was then cooled to 85°C and 185.9 parts dimethanol amine, 100 parts MIBK and 67.3 parts diethylaminopropyl amine were added. The mixture was held at 120°C for one hour, and 93 parts of MIBK were added. The resulting resin solution had a nonvolatile content of 62%.

(b) Preparation of Crosslinker Solution: A blocked polyisocyanate crosslinking resin solution was prepared by charging 862.0 parts of butyl cellosolve and 172.2 parts trimethylolpropane into a reaction vessel equipped as in Example 1. The mixture was heated to 60°C and 1419 parts LUPRANATE 266 (low viscosity isocyanate; BASF, Florham Park, NJ) were carefully added to the mixture under a nitrogen blanket while keeping the reaction mixture below 90°C. 13.2 parts butyl cellosolve were then added and the mixture was held at 96°C for two hours until essentially all the free isocyanate was consumed. Then 1038.4 parts MIBK were added. The resulting mixture had nonvolatile content of 70.0%.

(c) Preparation of Emulsion: 1089.7 parts of the chain-extended polyepoxide from Example 1(a) were added to a stainless steel beaker, along with 642.8 parts of the crosslinker solution from Example 1(b), 3.6 parts Surfynol 104 (surfactant; Air Products and Chemicals, Inc., Allentown, PA), DOWANOL PPh solvent (glycol ether; Dow Chemical), and 64.8 parts of an 88% solution of lactic acid, and thoroughly mixed with a high speed air mixer. 2106 parts of deionized water were then added under agitation. The mixture was allowed to mix until a majority of the organic ketone had evaporated. The nonvolatile content of the resulting emulsion was adjusted to 36% using deionized water.

**Example 2. Preparation of Pigment Paste** (a) Preparation of Pigment Dispersing Resin: A quarternizing agent was prepared by 356.6 parts dimethyl ethanolamine, to a half-capped toluene diisocyanate (TDI) made by mixing 80 parts MIBK with 696.8 parts TDI and 520 parts 2-ethyl hexanol in a suitable reaction vessel at room temperature. The mixture exothermed, and was stirred for one hour at 80°C. 400.9 parts lactic acid were then charged to the vessel followed by the addition of 156 parts butyl cellosolve. The reaction mixture was stirred for about one hour at 65°C to form the desired quarternizing agent.

A resin (commonly referred to as a pigment grind resin) was prepared by charging 491 parts EPON 829 (digycidyl ether of Bisphenol A; Hexion, Inc.) and 148 parts Bisphenol A into a suitable reaction mixture under a nitrogen atmosphere. The reaction mixture was allowed to exotherm for about one hour at 150°C to 160°C, then cooled to 120°C, followed by addition of the 2-ethyl hexanol half-capped TDI prepared above. The temperature of the reaction mixture was held at 110°C to 120°C for one hour, followed by the addition of butyl cellosolve. The reaction mixture was then cooled to 85°C, homogenized and charged with water, followed by the addition of the quarternizing agent prepared above. The temperature of the reaction mixture was held at 80°C to 85°C, until an acid value of 1.0 was obtained. The resulting product has a nonvolatile content of 58%.

(b) Preparation of Pigment Paste #1: 420.65 parts of the pigment dispersing resin from Example 2(a) at 53.2% nonvolatile content were charged to a suitable container along with 500.0 parts of deionized water, 5.54 parts SURFYNOL 104A (Air Products and Chemicals, Inc.), 119.8 parts RAVEN 850 carbon black powder, 178.92 parts ASP kaolin (BASF), 170 parts aluminum silicate, and 50 parts of bismuth aluminate hydrate. The contents were mixed until homogenous, followed by dispersion in a horizontal media mill until a Hegman reading of seven was obtained. The resulting paste had a nonvolatile content of 47.0%.

(c) Preparation of Pigment Paste #2: 420.65 parts of the pigment dispersing resin from Example 2(a) at 53.2% nonvolatile content were charged to a suitable container along with 558.8 parts of deionized water, 5.54 parts SURFYNOL 104A (Air Products), 119.8 parts RAVEN 850 carbon black powder, 178.92 parts ASP kaolin (BASF), 170 parts aluminum silicate, and 27 parts of bismuth aluminate hydrate, along with 37 parts bismuth citrate and 203 parts deionized water. The contents were mixed until homogenous, followed by dispersion in a horizontal media mill until a Hegman reading of seven was obtained. The resulting paste had a nonvolatile content of 36.7%.

**Examples 3 - 11.** Examples 3-11 were liquid samples removed from existing cathodic electrodeposition baths and tested in accordance with the Bacteria and Fungus Measurement Test.

Example 3 was a liquid sample taken from an electrodeposition bath that was not contaminated.

Examples 4 and 5 were contaminated water from two separate electrodeposition baths.

Example 6 was a liquid sample from an electrodeposition bath that was prepared by mixing 900 parts of the emulsion from Example 1 with 340.8 parts of the pigment paste #1 of Example 2, along with 2759.2 parts of non-contaminated deionized water in a 4.0L beaker with low agitation.

Example 7 was a liquid sample from an electrodeposition bath that was prepared by mixing 900 parts of the emulsion from Example 1 with 390 parts of the pigment paste #2 of Example 2, along with 2710 parts of non-contaminated deionized water in a 4.0L beaker with low agitation.

Example 8 was a liquid sample taken from an electrodeposition bath prepared by mixing 900 parts of the emulsion from Example 1 with 340.8 parts of the pigment paste #1 of Example 2, along with 2759.2 parts contaminated water from example 4 in a 4.0L beaker with low agitation.

Example 9 was a liquid electrodeposition bath prepared by mixing 900 parts of the emulsion from Example 1 with 390 parts of the pigment paste #2 of Example 2, along with 2710 parts contaminated water from Example 4 in a 4.0L beaker with low agitation.

Example 10 was an electrodeposition bath prepared by mixing 900 parts of the emulsion from Example 1 with 340.8 parts of the pigment paste #1 of Example 2, along with 2759.2 parts contaminated water from Example 5 in a 4.0L beaker with low agitation.

Example 11 was an electrodeposition bath prepared by mixing 900 parts of the emulsion from Example 1 with 390 parts of the pigment paste #2 of Example 2, along with 2710 parts contaminated water from Example 5 in a 4.0L beaker with low agitation.

Examples 3-11 were evaluated for Bacteria and Fungus over a seven day period using the Bacterial and Fungus Measurement Test. The test results are shown below in Table 1.

**Table 1**

| | **Bacteria growth** | | | | | | | **Fungus growth** | | | | | | |
|---|---|---|---|---|---|---|---|---|---|---|---|---|---|---|
| Day | 1 | 2 | 3 | 4 | 5 | 6 | 7 | 1 | 2 | 3 | 4 | 5 | 6 | 7 |
| Example 3 | ∼ | ∼ | ∼ | ∼ | ∼ | ∼ | ∼ | ∼ | ∼ | ∼ | ∼ | ∼ | ∼ | ∼ |
| Example 4 | ∼ | 4+ | | | | | | ∼ | 4+ | | | | | |
| Example 5 | ∼ | + | 3+ | 3+ | 3+ | 4+ | | ∼ | + | 3+ | | | | |
| Example 6 | ∼ | ∼ | ∼ | ∼ | ∼ | ∼ | ∼ | ∼ | ∼ | ∼ | ∼ | ∼ | ∼ | ∼ |
| Example 7 | ∼ | ∼ | ∼ | ∼ | ∼ | ∼ | ∼ | ∼ | ∼ | ∼ | ∼ | ∼ | ∼ | ∼ |
| Example 8 | ∼ | ∼ | ∼ | ∼ | ∼ | ∼ | ∼ | ∼ | ∼ | ∼ | ∼ | ∼ | ∼ | ∼ |
| Example 9 | ∼ | ∼ | ∼ | ∼ | ∼ | ∼ | ∼ | ∼ | ∼ | ∼ | ∼ | ∼ | ∼ | ∼ |
| Example 10 | ∼ | ∼ | ∼ | ∼ | ∼ | ∼ | ∼ | ∼ | ∼ | ∼ | ∼ | ∼ | ∼ | ∼ |
| Example 11 | ∼ | ∼ | ∼ | ∼ | ∼ | ∼ | ∼ | ∼ | ∼ | ∼ | ∼ | ∼ | ∼ | ∼ |

**Examples 12-14.** Examples 12-14 were liquid samples removed from three separate existing anodic electrodeposition baths and tested in accordance with the Bacteria and Fungus Measurement Test. Examples 12-14 were samples from three separate anodic acrylic electrodeposition baths. Example 12 tested as a 4+ in one day under the Bacterial and Fungus Measurement Test while Example 13 tested as 4+ in four days. Example 14 tested as 4+ in three days under the Bacteria and Fungus Measurement Test.

A slurry was made with water borne anodic acrylic resin and melamine with an over-neutralized pH. The bismuth aluminate was added at a ratio of 1 to 10. This slurry was then ground to a Hegman value of 7+.

The slurry was then added to Examples 12-14, at the ratios and dwell times reported in Table 2. Controls were used for Examples 13 and 14 to confirm the presence of microbes. The Examples were tested using the Bacteria and Fungus Measurement Test for a period of seven days. The results are shown in Table 2 and demonstrate that the antimicrobial agent reduces the microbial colonies over the duration of the test.

**Table 2**

| | | | | Results after 7 days | |
|---|---|---|---|---|---|
| Example | Type of Electrodeposition System | Dwell time | Bismuth Aluminate by Weight % on Bath | Bacteria | Fungus |
| Example 12 | Anodic Acrylic Electrocoat | 24 hrs | 1.00% | 4+ | 4+ |
| | | 2 weeks | 1.00% | + | 2+ |
| Example 13 | Anodic Acrylic Electrocoat | No Dwell | Control (0%) | 4+ | 4+ |
| | | 24 hrs | 0.10% | ∼ | ∼ |
| Example 14 | Anodic Acrylic Electrocoat | No Dwell | Control (0%) | 4+ | 4+ |
| | | 24 hrs | 0.10% | + | ∼ |

## Claims

1. A method of maintaining an electrodeposition system free of microbial contamination, comprising:
a) providing an effective amount of at least one antimicrobial agent comprising at least an inorganic bismuth-containing compound, wherein the inorganic bismuth-containing compound is a bismuth salt of a metal oxyanion or a hydrate thereof;
b) adding the antimicrobial agent to at least a part of the electrodeposition system;
c) monitoring bacterial and fungal growth in the electrodeposition system at regular intervals; and
d) adding an additional amount of the antimicrobial agent to the electrodeposition system if bacterial or fungal growth is observed.

2. The method of claim 1, wherein the inorganic bismuth-containing compound is bismuth aluminate.

3. The method of any of the above claims, wherein the antimicrobial agent further comprises an organic bismuth-containing compound.

4. The method of any of the above claims, wherein the antimicrobial agent comprises the inorganic bismuth-containing compound in combination with bismuth citrate.

5. The method of any of the above claims, wherein the antimicrobial agent comprises bismuth aluminate in combination with bismuth citrate.

6. The method of any of the above claims, wherein the electrodeposition system is a cathodic system.

7. The method of any of the claims 1 to 5, wherein the electrodeposition system is an anodic system.

8. The method of any of the above claims, wherein the at least one antimicrobial agent is present as at least part of a pigment paste for the electrodeposition system.

9. The method of any of the above claims, wherein the electrodeposition system exhibits no growth of microbial colonies.

10. The method of any of the above claims, wherein the electrodeposition system initially exhibits microbial colonies and the antimicrobial agent reduces the microbial population by at least 5% after seven days.

11. The method of any of the above claims, wherein the antimicrobial agent includes about 0.1% to 10% by weight of bismuth, based on the total weight of resin solids in the electrodeposition system.

12. The method of any of the above claims, wherein the antimicrobial agent is used as part of a continuous electrocoating process in the electrodeposition system.

13. The method of any of the above claims, wherein the antimicrobial agent is included in an electrodeposition coating composition.

14. The method of claim 13, wherein the electrodeposition coating composition comprises:
a) at least one binder resin component;
b) at least one pigment component; and
c) an effective amount of the antimicrobial agent.

## Patentansprüche

1. Ein Verfahren zur Freihaltung eines Elektroabscheidungssystems von mikrobieller Kontamination, umfassend:
a) Bereitstellen einer wirksamen Menge mindestens eines antimikrobiellen Mittels, umfassend mindestens eine anorganische Bismut enthaltende Verbindung, wobei die anorganische Bismut enthaltende Verbindung ein Bismutsalz eines Metalloxyanions oder eines Hydrats davon ist;
b) Zugeben des antimikrobiellen Mittels zu mindestens einem Teil des Elektroabscheidungssystems;
c) Überwachen des Bakterien- und Pilzwachstums in dem Elektroabscheidungssystem in regelmäßigen Intervallen; und
d) Zugeben einer weiteren Menge des antimikrobiellen Mittels zu dem Elektroabscheidungssystem, wenn ein Bakterien- oder Pilzwachstum beobachtet wird.

2. Das Verfahren nach Anspruch 1, wobei die anorganische Bismut enthaltende Verbindung Bismutaluminat ist.

3. Das Verfahren nach einem der vorstehenden Ansprüche, wobei das antimikrobielle Mittel ferner eine organische Bismut enthaltende Verbindung umfasst.

4. Das Verfahren nach einem der vorstehenden Ansprüche, wobei das antimikrobielle Mittel die anorganische Bismut enthaltende Verbindung in Kombination mit Bismutcitrat umfasst.

5. Das Verfahren nach einem der vorstehenden Ansprüche, wobei das antimikrobielle Mittel Bismutaluminat in Kombination mit Bismutcitrat umfasst.

6. Das Verfahren nach einem der vorstehenden Ansprüche, wobei das Elektroabscheidungssystem ein kathodisches System ist.

7. Das Verfahren nach einem der Ansprüche 1 bis 5, wobei das Elektroabscheidungssystem ein anodisches System ist.

8. Das Verfahren nach einem der vorstehenden Ansprüche, wobei das mindestens eine antimikrobielle Mittel mindestens als Teil einer Pigmentpaste für das Elektroabscheidungssystem vorliegt.

9. Das Verfahren nach einem der vorstehenden Ansprüche, wobei das Elektroabscheidungssystem keinen Wachstum von mikrobiellen Kolonien aufweist.

10. Das Verfahren nach einem der vorstehenden Ansprüche, wobei das Elektroabscheidungssystem zu Beginn mikrobielle Kolonien aufweist und das antimikrobielle Mittel die mikrobielle Population nach sieben Tagen um mindestens 5% reduziert.

11. Das Verfahren nach einem der vorstehenden Ansprüche, wobei das antimikrobielle Mittel etwa 0,1 Gew.-% bis 10 Gew.-% Bismut, bezogen auf das Gesamtgewicht der Harzfeststoffe in dem Elektroabscheidungssystem, enthält.

12. Das Verfahren nach einem der vorstehenden Ansprüche, wobei das antimikrobielle Mittel als Teil eines kontinuierlichen Elektrobeschichtungsverfahrens in dem Elektroabscheidungssystem verwendet wird.

13. Das Verfahren nach einem der vorstehenden Ansprüche, wobei das antimikrobielle Mittel in einer Beschichtungszusammensetzung zur Elektroabscheidung enthalten ist.

14. Das Verfahren nach Anspruch 13, wobei die Beschichtungszusammensetzung zur Elektroabscheidung umfasst:
a) mindestens eine Bindemittelharzkomponente;
b) mindestens eine Pigmentkomponente; und
c) eine wirksame Menge des antimikrobiellen Mittels.

## Revendications

1. Méthode pour maintenir un système d'électrodéposition exempt de contamination microbienne, comprenant :
a) la fourniture d'une quantité efficace d'au moins un agent antimicrobien comprenant au moins un composé inorganique contenant du bismuth, ledit composé inorganique contenant du bismuth étant un sel de bismuth d'un oxyanion métallique ou un hydrate de celui-ci ;
b) l'addition de l'agent antimicrobien à au moins une partie du système d'électrodéposition ;
c) la surveillance de la croissance bactérienne et fongique dans le système d'électrodéposition à intervalles réguliers ; et
d) l'ajout d'une quantité additionnelle de l'agent antimicrobien au système d'électrodéposition si une croissance bactérienne ou fongique est observée.

2. Méthode selon la revendication 1, dans laquelle le composé inorganique contenant du bismuth est l'aluminate de bismuth.

3. Méthode selon l'une quelconque des revendications précédentes, dans laquelle l'agent antimicrobien comprend en outre un composé organique contenant du bismuth.

4. Méthode selon l'une quelconque des revendications précédentes, dans laquelle l'agent antimicrobien comprend le composé inorganique contenant du bismuth en combinaison avec du citrate de bismuth.

5. Méthode selon l'une quelconque des revendications précédentes, dans laquelle l'agent antimicrobien comprend de l'aluminate de bismuth en combinaison avec du citrate de bismuth.

6. Méthode selon l'une quelconque des revendications précédentes, dans laquelle le système d'électrodéposition est un système cathodique.

7. Méthode selon l'une quelconque des revendications 1 à 5, dans laquelle le système d'électrodéposition est un système anodique.

8. Méthode selon l'une quelconque des revendications précédentes, dans laquelle l'au moins un agent antimicrobien est présent en tant qu'au moins une partie d'une pâte de pigment pour le système d'électrodéposition.

9. Méthode selon l'une quelconque des revendications précédentes, dans laquelle le système d'électrodéposition ne présente pas de croissance de colonies microbiennes.

10. Méthode selon l'une quelconque des revendications précédentes, dans laquelle le système d'électrodéposition présente initialement des colonies microbiennes et l'agent antimicrobien réduit la population microbienne d'au moins 5 % après sept jours.

11. Méthode selon l'une quelconque des revendications précédentes, dans laquelle l'agent antimicrobien comprend environ 0,1 % à 10 % en poids de bismuth, par rapport au poids total de solides résineux dans le système d'électrodéposition.

12. Méthode selon l'une quelconque des revendications précédentes, dans laquelle l'agent antimicrobien est utilisé en tant que partie d'un procédé d'électrorevêtement continu dans le système d'électrodéposition.

13. Méthode selon l'une quelconque des revendications précédentes, dans laquelle l'agent antimicrobien est inclus dans une composition de revêtement par électrodéposition.

14. Méthode selon la revendication 13, dans laquelle la composition de revêtement par électrodéposition comprend :
a) au moins un composant résine liante ;
b) au moins un composant pigment ; et
c) une quantité efficace de l'agent antimicrobien.
